# EUROPÄISCHE PATENTSCHRIFT

(11) **EP 3 191 400 B1**
(45) Veröffentlichungstag und Bekanntmachung des Hinweises auf die Patenterteilung: **18.04.2018**
(21) Anmeldenummer: 16731118.2
(22) Anmeldetag: 20.06.2016
(51) Int. Cl.: C01B 33/155, C01B 33/158, C01B 33/16

(54) **VERFAHREN ZUR HERSTELLUNG VON LYOGELEN**
PROCESS FOR PRODUCING LYOGELS
PROCÉDÉ DE PRÉPARATION DE LYOGELS

(30) Priorität: 25.06.2015 DE 102015211812
(43) Veröffentlichungstag der Anmeldung: 19.07.2017
(73) Patentinhaber: Wacker Chemie AG, 81737 München (DE)
(72) Erfinder: JANTKE, Dominik, 85386 Eching (DE); HINDELANG, Konrad, 80939 München (DE); WEIDNER, Richard, 84489 Burghausen (DE)
(74) Vertreter: Fritz, Helmut
(86) Internationale Anmeldenummer: PCT/EP2016/064130
(87) Internationale Veröffentlichungsnummer: WO 2016/207096

(56) Entgegenhaltungen:
- EP-A1- 2 832 690
- WO-A1-2008/143384
- DE-A1- 19 648 798
- DE-T2- 69 819 365
- DE-T2- 69 904 142
- US-A1- 2008 081 014
- US-A1- 2012 225 003

## Beschreibung

Gegenstand der Erfindung ist ein Verfahren zur Herstellung von Lyogelen, indem (i) eine basische, polare Phase, enthaltend Wasser und Ausgangsstoffe für silikatische Gele, in einer unpolaren Phase, enthaltend eine mit Wasser nicht mischbare Vorstufe für ein aktives Silylierungsmittel, emulgiert wird, (ii) Gelbildung und Alterung durch Senkung des pH-Werts gestartet werden, und anschließend (iii) durch Senkung des pH-Werts die Silylierung und der Lösungsmittelaustausch gestartet werden.

Die Wärmedämmung zur Einsparung von Energie hat im Rahmen des Bewusstwerdens für nachhaltige Entwicklung und der Verteuerung der Energie sowie sich verknappenden fossilen Rohstoffen einen hohen Stellenwert erhalten. Diese Anforderungen an eine Optimierung des Wärmedämmschutzes gelten im gleichen Maße sowohl für Gebäude, also für Neubauten oder Bauten im Bestand, als auch für thermische Isolierungen im logistischen oder stationären Bereich.

Vor dem Hintergrund einer nachhaltigen Isolierung, welche eine geringe Wärmeleitung sowie geringe Brennbarkeit aufweist, sind anorganische, poröse Materialien zunehmend im Fokus.

Aerogele mit hohen Porositäten (> 60%) und geringer Dichte (< 0,6 g/ml) weisen eine geringe thermische Leitfähigkeit auf und finden deshalb als thermische Isolatoren ein breites Anwendungsspektrum (M. A. Aegerter et al. (Eds.), Aerogels Handbook Series: Advances in Sol-Gel Derived Materials and Technologies, 1st ed. 2011, Springer Verlag, New York Dordrecht Heidelberg London).

Aufgebaut sind Gele, insbesondere SiO₂-Gele aus Netzwerken, welche sich aus Primärpartikeln zusammensetzen, die nach ihrer Verknüpfung und Versinterung der Kontaktflächen in einem Sol-Gel-Prozess, stabile, flüssigkeitsgefüllte Netzwerke, sogenannte Lyogele, bilden. Während bei einem Lyogel die Poren mit Lösungsmittel gefüllt sind, stellt ein Hydrogel einen Spezialfall des Lyogels dar, bei dem die Porenflüssigkeit zu mindestens 50% aus Wasser besteht. Diese Lyogele können durch Entfernen des Lösungsmittels in Aerogele überführt werden. Die Poren des Aerogels sind dementsprechend mit Luft gefüllt.

Es ist wünschenswert, eine möglichst hohe Hydrophobie der SiO₂-Aerogele zu erreichen, um die Wasseraufnahme und dadurch den Verlust der thermischen Isolierungswirkung zu reduzieren. Erreicht wird eine permanente Hydrophobie durch Behandlung der Oberfläche von Gelnetzwerken mit hydrophoben Gruppen, bevorzugt durch Modifizierung.

Die Hydrophobierung erfüllt dabei nicht nur den Zweck der verringerten Wasseraufnahme im trocknen Zustand, sie ermöglicht auch die unterkritische Trocknung der Gele. Bei der unterkritischen Trocknung kommt es durch die auftretenden Kapillarkräfte zu einer Schrumpfung der Gele, welche im Falle von hydrophilen Oberflächen mit freien Si-OH Gruppen durch die Kondensation dieser Si-OH Gruppen im geschrumpften Zustand, irreversibel ist. Zudem sind hydrophile Lyogele in der Regel mit polaren Lösungsmitteln gefüllt, welche durch hohe Kapillarkräfte für eine starke Schrumpfung der Gele verantwortlich sind. Im Falle der hydrophobierten Oberflächen liegen die Lyogele in der Regel in unpolaren Lösungsmitteln vor. Durch die Trocknung wird nun einerseits ein geringerer Schrumpf beobachtet, als auch die Möglichkeit der Kondensation der Si-OH Gruppen unterbunden, da diese durch die Hydrophobierung funktionalisiert wurden.

Es ist für wirtschaftliche Umsetzung eines Verfahrens zur Herstellung von organisch modifizierten Aerogelen, welche unterkritisch getrocknet werden können, besonders wünschenswert, möglichst schnelle und kostengünstige Prozessschritte zu entwickeln, welche sich durch einen effizienten Stoffeinsatz und insbesondere kurze Zeiten und einfache Durchführung für die einzelnen Verfahrensschritte, auszeichnen.

Dementsprechend wurde in EP 0 948 395 B1 ein Verfahren zur Herstellung von organisch modifizierten Aerogelen entwickelt, in dem ein Hydrogel direkt oberflächenmodifiziert wird, ohne vorher die wässrige Porenflüssigkeit durch organische Lösungsmittel zu ersetzen, In den Beispielen wird eine Natriumwasserglaslösung oder Siliciumtetrachlorid als SiO₂-Quelle verwendet und Hexamethyldisiloxan (HMDSO), Trimethylchlorsilan (TMCS) oder Trimethylsilanol zur Modifizierung eingesetzt. Die freien, hydrophilen Si-OH Gruppen des Hydrogels reagieren dabei mit den eingesetzten Silylierungsmitteln, es erfolgt die Funktionalisierung mit Sauerstoff-gebundenen Trimethylsilylgruppen (TMS, (CH₃)₃SiO_{1/2}). Wird die Silylierung so durchgeführt, dass ein Teil des Wassers in den Poren des Hydrogels mit dem verwendeten Silylierungsmittel (z.B. TMCS) zu dem wasserunlöslichen Hexamethyldisiloxan reagiert, so wird durch das Volumen der gebildeten Verbindung notwendigerweise mindestens ein Teil des Wassers aus den Poren verdrängt, Dies führt während der Silylierung der inneren Oberfläche des Netzwerks zu einem gleichzeitigen, vollständigen oder teilweisen Austausch der Flüssigkeit in den Poren des Hydrogels durch das wasserunlösliche, unpolare Medium, Das in EP 0 948 395 B1 offenbarte Verfahren hat den Nachteil, dass die Herstellung der Hydrogele aus Wasserglas entweder durch vorhergehende Entsalzung durch Ionentauscher durchgeführt werden muss oder die Entfernung der Salze nach der Silylierung schwierig zu bewerkstelligen ist. Die vorgelagerte Solherstellung durch Neutralisation der Wasserglaslösung stellt einen zusätzlichen Prozessschritt dar, der beispielsweise aufgrund der notwendigen Kühlung energieintensiv und prozesstechnisch aufwändig ist. Zudem hat das Verfahren den Nachteil, dass die Silylierung entweder bei hohen Temperaturen von 80-100 °C stattfindet oder eine sehr lange Reaktionszeit von mehreren Tagen erforderlich ist. Nur durch die Verwendung großer Mengen an HCl und/oder Trimethylchlorsilan gelingt hierbei eine schnelle und vollständige Silylierung. Während der Hydrophobierung wird die Porenflüssigkeit aus dem Gel verdrängt und durch HMDSO ersetzt, wobei die Autoren dieses Patents, F. Schwertfeger und D. Frank, in einer nachfolgenden Publikation mit M. Schmidt im Journal of non-Crystalline Solids (Vol. 225, S. 24-29, 1998) konkretisieren, dass sie für einen vollständigen Austausch der Porenflüssigkeit mindestens 15 mol-% TMCS bezogen auf das Porenwasser, das entspricht 81,5 g TMCS je 100 g Hydrogel (s. Probe 2 in Tab. 1), benötigen, um einen vollständigen Austausch der Porenflüssigkeit und damit Aerogele geringer Dichte (kleiner 140 kg/m³) zu erhalten. Dabei entstehen je 100 g Hydrogel 80 ml HMDSO als Nebenprodukt. Dabei fallen hohe Rohstoffkosten an.

In US 2012/0225003 ist ein Verfahren zur Herstellung von Aerogelpulvern beschrieben, in dem Wasserglas mit einer anorganischen Säure, bevorzugt Salpetersäure, einem Organosilan, bevorzugt Hexamethyldisilazan (HMN), gemischt wird und eine Emulgierung in einem organischen Lösungsmittel, wobei hier die Auswahl aus n-Hexan, n-Heptan, Toluol, Xylol oder deren Mischungen angegeben ist, durchgeführt wird. Dabei finden gleichzeitig sowohl die Gelbildung als auch der Lösungsmittelaustausch statt. Das Verfahren zeichnet sich dadurch aus, dass es sehr schnell durchzuführen ist, da die Solbildung, also die Neutralisation der Wasserglaslösung, direkt in der kontinuierlichen Phase stattfindet. Die Gelbildung und Wasserverdrängung können hier in etwa einer Stunde abgeschlossen werden. Die Ausschleusung der Elektrolyte, also der aus den Vorstufen, dem Silylierungsmittel und der Mineralsäure gebildeten Salze, wird im Zuge der Wasserverdrängung durchgeführt.
Dieses Verfahren hat den Nachteil, dass das eingesetzte, mit Wasser mischbare Silylierungsmittel Hexamethyldisilazan in großen Mengen zugegeben wird (60 ml pro 500 ml Wasserglas-Lösung) und dieses durch die ablaufenden Reaktionen vollständig verbraucht wird. Auch der Anteil, welcher nicht mit der Oberfläche im Zuge der Silylierung reagiert, wird durch Hydrolyse und Kondensationsprozesse verbraucht und kann nicht direkt zurückgewonnen werden. Die damit verbundenen hohen Kosten für die Rohstoffe und die aufwändige Stofftrennung bzw. Entsorgung, führen zu hohen Herstellungskosten.

Es stellte sich daher die Aufgabe, ein schnelles und wirtschaftliches Verfahren zur Verfügung zu stellen, welches sich durch einen effizienten Stoffeinsatz, insbesondere des Silylierungsmittels, auszeichnet, und durch welches schnell und einfach organisch modifizierte Aerogele gewonnen werden.

Gelöst wird diese Aufgabe durch die Erfindung, die ein schnelles Verfahren zur Verfügung stellt, durch welches organisch modifizierte Gele erhalten werden können. Die Erfindung stellt ein Verfahren zur Herstellung von Lyogelen zur Verfügung, indem (i) eine basische, polare Phase, enthaltend Wasser und Ausgangsstoffe für silikatische Gele, in einer unpolaren Phase, enthaltend eine mit Wasser nicht mischbare Vorstufe für ein aktives Silylierungsmittel, emulgiert wird, (ii) Gelbildung und Alterung durch Senkung des pH-Werts gestartet werden, und anschließend (iii) durch Senkung des pH-Werts die Silylierung und der Lösungsmittelaustausch gestartet werden.

Ein Gel im Sinne der vorliegenden Erfindung ist ein disperses System, das aus mindestens zwei Komponenten besteht. Die feste Komponente bildet dabei ein schwammartiges, dreidimensionales Netzwerk, dessen Poren durch eine Flüssigkeit oder ein Gas ausgefüllt sind. Die flüssige oder gasförmige Komponente ist dadurch in der festen immobilisiert. Sind die Poren mit Lösungsmittel gefüllt, liegt ein Lyogel vor. Ist das Netzwerk hochporös und Luft das eingelagerte Gas, so wird das Gel auch als Aerogel bezeichnet. Erfindungsgemäß sind die Gele ausgewählt aus Lyo- oder Aerogelen.

Erfindungsgemäß wird im 1. Schritt des Verfahrens (Schritt i) eine basische, polare Phase, enthaltend Wasser und Ausgangsstoffe für silikatische Gele, in einer unpolaren Phase, enthaltend eine mit Wasser nicht mischbare Vorstufe für ein aktives Silylierungsmittel, emulgiert.

Unter Emulgieren versteht man, dass eine Emulsion, d.h. ein fein verteiltes Gemisch zweier normalerweise nicht mischbarer Flüssigkeiten ohne sichtbare Entmischung hergestellt wird. Um die Entmischung zu verhindern, kann beispielsweise weiterhin gerührt oder eine Stabilisierung mit Hilfe von z.B. Tensiden durchgeführt werden.

In dieser Erfindung wird die basisch, polare Phase auch mit wässriger Phase bezeichnet. Die unpolare Phase wird auch mit kontinuierlicher Phase bezeichnet.

Im Rahmen dieser Erfindung haben die Begriffe Silylierung, Oberflächenmodifizierung und Hydrophobierung die gleiche Bedeutung.

Erfindungsgemäß handelt es sich bei den Gelen um silikatische Gele, d.h. das Netzwerk enthält [SiO_{4/2}]-Einheiten.

Als Ausgangsstoff für [SiO_{4/2}]-Einheiten ([SiO_{4/2}]-Ausgangsstoff) können dem Fachmann bekannte, kondensationsfähige tetra- oder höherfunktionelle Silane, Alkoxysilane, Alkylsilicate, Alkalisilicate oder kolloidale Silica-Partikel bzw. -Lösungen verwendet werden.
Es ist bevorzugt, als Ausgangsstoff für [SiO_{4/2}]-Einheiten Wassergläser oder kolloidale Silica-Lösungen, wobei der mittlere Partikeldurchmesser der Silica-Partikel bevorzugt unter 8 nm, besonders bevorzugt unter 6 nm, insbesondere bevorzugt im Bereich von 1 bis 5 nm liegt, einzusetzen. Insbesondere bevorzugt wird Natriumwasserglas eingesetzt. Der pH Wert der Lösung der Ausgangsstoffe liegt bevorzugt über pH 10, besonders bevorzugt über pH 11.
Im speziellen bevorzugt werden kolloidale Silica-Lösungen eingesetzt. Es können auch Gemische oder Hydrolyseprodukte der genannten Ausgangsstoffe, insbesondere deren Hydrolyseprodukte mit Wasser und/oder Alkoholen, eingesetzt werden.

Die erfindungsgemäßen silikatischen Lyogele enthalten [SiO_{4/2}]-Einheiten. Es ist bevorzugt, dass die Gele neben den [SiO_{4/2}]-Einheiten auch [RₓSiO_{(4-x)/2}]-Einheiten enthalten, besonders bevorzugt sind die Gele aus [SiO_{4/2}]- und [RₓSiO_{(4-x)/2}]-Einheiten aufgebaut. Das bedeutet, dass die basische polare Phase bevorzugt eine Mischung der Ausgangsstoffe für [SiO_{4/2}]- und [RₓSiO_{(4-x)/2}]-Einheiten, wobei x=1 oder 2 oder deren Gemische und R gleich oder verschieden sein kann und Wasserstoff oder ein organischer, substituierter oder unsubstituierter Rest bedeutet, enthält.

Als Ausgangsstoff für [RₓSiO_{(4-x)/2}]-Einheiten ([RₓSiO_{(4-x)/2}]-Ausgangsstoff) können dem Fachmann bekannte, kondensationsfähige bifunktionelle, trifunktionelle oder höher funktionelle Silane, Alkoxysilane oder Siliconate eingesetzt werden. Bevorzugt werden als Ausgangsstoff für die [RₓSiO_{(4-x)/2}]-Einheiten Methyltriethoxysilan (MTES), Methyltrimethoxysilan, Kaliummethylsiliconat oder Natriummethylsiliconat eingesetzt, insbesondere bevorzugt werden Kaliummethylsiliconat oder Natriummethylsiliconat eingesetzt.

Es können auch Gemische oder Hydrolyseprodukte der genannten Ausgangsstoffe, insbesondere deren Hydrolyseprodukte mit Wasser und/oder Alkoholen, eingesetzt werden.

Die Reste R können gleich oder verschieden sein und unabhängig voneinander, Wasserstoff, ein organischer, linearer, verzweigter, cyclischer, gesättigter oder ungesättigter, aromatischer oder heteroaromatischer Rest, mit oder ohne Substituenten. Das bedeutet, dass die Reste R substituiert oder unsubstituiert sein können. Bevorzugte Substituenten sind -CN, -NCO, -NR₂, - COOH, -COOR, -Halogen, -(Meth)acryl, -Epoxy, -SH, -OH, -CONR₂, - O-R, -CO-R, -COO-R, -OCO-R, oder -OCOO-R, -S-R, -NR-, -N=R, - N=N-R, oder -P=R. Vorzugsweise werden gesättigte oder ungesättigte Reste mit C₁-C₄-, besonders bevorzugt C₁-C₄-Alkyl, Vinyl, insbesondere Methyl oder Ethyl, im speziellen Methyl eingesetzt.

Bevorzugt ist mindestens ein Rest R der [RₓSiO_{(4-x)/2}]-Einheiten organischer Natur, d.h. es liegt mindestens eine Si-C-Bindung vor, besonders bevorzugt ist mindestens ein Rest R eine Methylgruppe, insbesondere bevorzugt sind alle Reste R der [RₓSiO_{(4-x)/2}]-Einheiten Methylgruppen.

Der Anteil der [RₓSiO_{(4-x)/2}]-Einheiten (bezogen auf die Summe der [SiO_{4/2}]-Einheiten und der [RₓSiO_{(4-x)/2}]-Einheiten) kann im Bereich zwischen 0 und 99 mol-% liegen, bevorzugt liegt er zwischen 0 und 50 mol-%, besonders bevorzugt zwischen 0 und 25 mol-% und insbesondere bevorzugt zwischen 0 und 10 mol-%.

Ein Vorteil des Einsatzes von Ausgangsstoffen für [RₓSiO_{(4-x)/2}]-Einheiten in Schritt i) des Verfahrens besteht darin, dass durch die Si-R Gruppen der [RₓSiO_{(4-x)/2}]-Einheiten das Produkt (also das Gel) eine Grundhydrophobierung erhält. Durch die in Schritt iii) folgende Silylierung werden noch vorhandene freie und zugängliche Si-OH-Gruppen modifiziert. Somit handelt es sich bei der Grundhydrophobierung und Silylierung um kooperative (gemeinsame) Effekte. Da durch die Grundhydrophobierung auch Si-Positionen modifiziert sind, d.h. an eine Gruppe R gebunden sind, die der nachfolgenden Silylierung evt. gar nicht zugänglich wären, wenn sie eine freie OH-Gruppe hätten, kann durch den Einsatz von Ausgangsstoffen für [RₓSiO_{(4-x)/2}]-Einheiten eine hohe Gesamthydrophobie des Gels erreicht werden.

Unter Hydrophobie wird im Rahmen der Erfindung die Eigenschaft verstanden, dass die Oberfläche der Produkte mit unpolaren, organischen Einheiten modifiziert ist, was dazu führt, dass die Oberfläche der Produkte weitegehend nicht mit Wasser benetzbar ist.

Die zuvor genannten Ausgangsstoffe für [SiO_{4/2}]-Einheiten und gegebenenfalls [RₓSiO_{(4-x/2)}]-Einheiten können durch Wasserzugabe und gegebenenfalls Zugabe eines Phasenvermittlers, sowie gegebenenfalls eines Gelbildungsbeschleunigers auf die gewünschte Konzentration verdünnt werden und in einer mit Wasser nicht mischbaren Vorstufe für ein Silylierungsmittel emulgiert werden. Das Emulgieren erfolgt nach den dem Fachmann bekannten Methoden wie beispielsweise Rühren. Um die Entmischung zu verhindern, wird weiterhin gerührt.

In einer bevorzugten Ausführungsform wird die basische, polare Phase durch Mischen der einzelnen Komponenten in der unpolaren Phase hergestellt. Das heißt, dass die mit Wasser nicht mischbare Vorstufe für ein Silylierungsmittel vorgelegt und sukzessive die weiteren Inhaltsstoffe umfassend die Ausgangsstoffe für silikatische Gele und gegebenenfalls Hilfsstoffe zugegeben werden. Die Herstellung der basischen, polaren Phase enthaltend die Ausgangsstoffe für silikatische Gele wird in einer bevorzugten Ausführungsform also direkt in der mit Wasser nicht mischbaren Vorstufe für ein Silylierungsmittel durchgeführt, wobei sich eine Emulsion bildet.

Die Rührgeschwindigkeit wird dabei bevorzugt so gewählt, dass sich aufgrund der unterschiedlichen Dichten der wässrigen, dispersen Phase und der kontinuierlichen Phase keine Phasentrennung einstellt.

Gegebenenfalls sind in der polaren Phase auch Hilfsstoffe wie Phasenvermittler vorhanden. Diese werden entweder aus den Ausgangsstoffen gebildet oder zugegeben. Die Zugabe kann dabei während der Emulgierung der Ausgangsstoffe, während oder nach der Gelbildung oder vor dem Start der Silylierung erfolgen. Bevorzugt erfolgt das erfindungsgemäße Verfahren in Anwesenheit eines Phasenvermittlers, besonders bevorzugt ist dieser in der basischen, polaren Phase vorhanden. Es ist insbesondere bevorzugt, dass der Phasenvermittler unmittelbar vor Beginn der Silylierung, d.h. direkt vor Schritt iii), zugegeben wird.

Unter einem Hilfsstoff wird in der vorliegenden Anmeldung ein Stoff verstanden, der es ermöglicht die für die Herstellung von organisch modifizierten Gelen notwendigen Reaktionszeiten zu verkürzen und/oder die notwendigen Prozesstemperaturen zu erniedrigen. Eingesetzt werden alle dem Fachmann bekannten Hilfsstoffe zur Verkürzung der Gelbildungsdauer, ein bevorzugter Hilfsstoff ist beispielsweise Kochsalz.

Unter einem Phasenvermittler wird in der vorliegenden Anmeldung eine polare Verbindung oder Gemische verschiedener dieser Verbindungen verstanden, die sowohl in der wasserreichen Phase als auch in der organischen Phase eine merkliche Löslichkeit besitzt und somit den Stofftransport zwischen den beiden im Wesentlichen nicht mischbaren Phasen beschleunigt.

Als Phasenvermittler geeignet sind polare organische Verbindungen oder Gemische davon wie
- Alkohole, insbesondere der chemischen Formel R-OH, wobei R wie oben für Reste R angegeben definiert ist (z.B. Methanol, Ethanol, Isopropanol)
- Ketone, insbesondere der chemischen Formel R¹R²C=O, wobei R¹ und R² gleich oder verschieden und wie oben für Reste R angegeben definiert sind (z.B. Aceton (CH₃)₂C=O)
- Ether, insbesondere der chemischen Formel R¹OR², wobei R¹ und R² gleich oder verschieden und wie oben für Reste R angegeben definiert sind (z.B. Diethylether, Tetrahydrofuran, Dimethoxyethan)
- Ester, insbesondere der chemischen Formel R¹COOR², wobei R¹ und R² gleich oder verschieden und wie oben für Reste R angegeben definiert sind (z.B. Ethylacetat) und
- grenzflächenaktive Substanzen wie Tenside.
   Grenzflächenaktiv nennt man organische Verbindungen, die sich dank ihrer Struktur in der Grenzfläche zwischen zwei Phasen so anordnen, dass sie die Grenzflächenspannung (=Oberflächenspannung) erniedrigen und dadurch z.B. Benetzung ermöglichen. Durch Herabsetzen der Oberflächenspannung fördern sie die Durchmischung von zwei Phasen unter Umständen bis zur Bildung einer Emulsion. Je nach ihrer chemischen Zusammensetzung und Anwendung werden grenzflächenaktive Substanzen als Netzmittel, Detergenzien (Tenside, Seife) oder Emulgatoren bezeichnet.
   Die Stoffe enthalten im Allgemeinen je eine Wasser stark anziehende hydrophile ("wasserfreundliche") Gruppe und eine lipophile ("fettfreundliche"), Wassermoleküle nur schwach anziehende (hydrophobe) Kohlenwasserstoffgruppe.

Als Phasenvermittler werden bevorzugt Alkohole verwendet wie beispielsweise Methanol, Ethanol und Isopropanol, insbesondere bevorzugt wird als Phasenvermittler Ethanol verwendet. Es ist daher insbesondere bevorzugt, dass in der basischen, polaren Phase Ethanol vorhanden ist.

Gegebenenfalls werden der wässrigen Phase auch Hilfsstoffe zur Beschleunigung der Gelbildung zugegeben. Es ist bevorzugt, der wässrigen Phase ein Alkalisalz zuzusetzen. Besonders bevorzugt wird der wässrigen Phase Natriumchlorid zugesetzt.

Darüber hinaus können der wässrigen Phase Zusatzstoffe wie dem Fachmann bekannt IR-Trübungsmittel zur Reduzierung der Wärmeleitfähigkeit zugesetzt werden. Ebenso können zur Erhöhung der mechanischen Stabilität beschichtete und / oder unbeschichtete Fasern zugesetzt werden. Als Fasermaterialien können anorganische Fasern, wie z.B. Glasfasern oder Mineralfasern, organische Fasern, wie z.B. Polyesterfasern, Aramidfasern, Nylonfasern oder Fasern pflanzlichen Ursprungs, sowie Gemische derselben verwendet werden.

Die wässrige, disperse Phase enthaltend Ausgangsstoffe für [SiO_{4/2}]-Einheiten und gegebenenfalls [RₓSiO_{(4-x/2)}]-Einheiten weist in dem vorliegenden Verfahren erfindungsgemäß einen basischen pH-Wert, d.h. einen pH-Wert größer 7, auf. Bevorzugt liegt der pH-Wert der wässrigen Phase zwischen 10 und 14. Das Vorliegen eines basischen pH-Werts in der wässrigen Phase/Schritt i) hat den Vorteil, dass noch keine Gelbildung stattfindet, sowie keine Aktivierung der Vorstufe des aktiven Silylierungsmittels.

Der Feststoffgehalt der Gele, also der Gehalt an [SiO_{4/2}]-Einheiten und gegebenenfalls [RₓSiO_{(4-x)/2}]-Einheiten, beträgt in der wässrigen Phase bevorzugt zwischen 3 und 30 Gew.-%, besonders bevorzugt zwischen 3 und 20 Gew.-% und insbesondere bevorzugt zwischen 3 und 10 Gew.-%.

Eine vorhergehende Entfernung von Elektrolyten, wie beispielsweise Salzen, ist in diesem Verfahren nicht notwendig. Die in der polaren Phase enthaltenen Elektrolyte werden im Zuge des Lösungsmittelaustauschs aus den Poren verdrängt und können mit der polaren Phase durch eine Phasentrennung entfernt werden.

Als kontinuierliche Phase können alle dem Fachmann bekannten, mit Wasser nicht mischbaren Vorstufen für aktive Silylierungsmittel eingesetzt werden.
Dabei ist es für die erfindungsgemäße Durchführung des Verfahrens bevorzugt, dass die Vorstufen für aktive Silylierungsmittel bei basischen bis neutralen pH-Werten, bei denen die erfindungsgemäßen Schritte i) und ii) durchgeführt werden, weitgehend inaktiv sind, das heißt, eine Silylierung der inneren Oberfläche der gebildeten Gele ohne einen weiteren Aktivierungsschritt nicht in der für die Gelbildung benötigten Dauer ablaufen kann. Die mit Wasser nicht mischbaren Vorstufen für aktive Silylierungsmittel können gegebenenfalls auch in Mischung mit wasserunlöslichen, organischen Lösungsmitteln, wie beispielsweise n-Hexan, n-Heptan, vorliegen. Bevorzugt besteht die kontinuierliche, unpolare Phase nur aus einer mit Wasser nicht mischbaren Vorstufe für ein aktives Silylierungsmittel. Besonders bevorzugt werden als Vorstufen für aktive Silylierungsmittel Verbindungen eingesetzt, die durch die Silylierung zur Belegung der inneren und äußeren Gel-Oberfläche mit monofunktionellen Einheiten führen. Insbesondere bevorzugt werden als mit Wasser nicht mischbare Vorstufen für ein aktives Silylierungsmittel Disiloxane oder deren Mischungen, sowie Lösungen dieser in nicht reaktiven, polaren Lösungsmitteln eingesetzt. Die Lösungsmittel sind bevorzugt Kohlenwasserstoffe wie Pentan, Hexan, Heptan und Toluol.
Disiloxane sind chemische Verbindungen mit der Formel R₃Si-O-SiR₃ oder [R¹R²R³SiO_{1/2}]₂, wobei wiederum für R oder R¹, R² und R³ die oben gegebene Definition gilt und das Disiloxan mindestens eine Si-C-Bindung aufweist. Es werden bevorzugt symmetrische Disiloxane, insbesondere bevorzugt Hexamethyldisiloxan eingesetzt. Es können auch Mischungen verschiedener Disiloxane, insbesondere Mischungen aus Hexamethyldisiloxan und Divinyltetramethyldisiloxan eingesetzt werden.

Diese Verfahrensfahrweise hat den Vorteil, dass nach Abschluss der Silylierung der nicht für die Reaktion benötigte Anteil der kontinuierlichen Phase zurückgewonnen werden kann und somit zu einer wirtschaftlichen Umsetzung beiträgt. Eine Zersetzung der nicht benötigten Vorstufe für das aktive Silylierungsmittel findet nicht statt.

Als Vorstufe für ein aktives Silylierungsmittel versteht man in der vorliegenden Anmeldung ein Mittel, welches durch Aktivierung zur Übertragung von Silyl-Gruppen geeignet ist.

Erfindungsgemäß wird im 2. Schritt des Verfahrens (Schritt ii) die Gelbildung und Alterung durch Senkung des pH-Werts gestartet.
Für die Gelbildung wird bevorzugt ein pH-Wert ≥7, besonders bevorzugt zwischen 7 und 10 und insbesondere bevorzugt zwischen 8 und 9 eingestellt. Zur Senkung des pH-Werts in Schritt ii) werden bevorzugt Säuren zugesetzt, wobei alle dem Fachmann bekannten Säuren eingesetzt werden können. Besonders bevorzugt wird zur Senkung des pH-Werts in Schritt ii) eine Mineralsäure verwendet, insbesondere bevorzugt wird HNO₃ (Salpetersäure) oder HCl (Salzsäure) eingesetzt. Der Begriff Mineralsäuren ist eine Sammelbezeichnung für die vier starken anorganischen Säuren Salzsäure, Schwefelsäure, Phosphorsäure und Salpetersäure. Zusätzlich kann eine Temperaturänderung, bevorzugt Temperaturerhöhung zur Beschleunigung der Gelbildung durchgeführt werden.

In einer weiteren bevorzugten Ausführungsform kann die Senkung des pH-Werts in Schritt ii) durch Zugabe von Chlorsilanen durchgeführt werden. Chlorsilane sind Verbindungen des Typs RₓSiCl₄₋ₓ, wobei x = 0 - 2 ist und für R die oben angegebene Definition gilt. Die Chlorsilane werden dabei in der wässrigen Phase zu HCl und [RₓSiO_{(4-x/2)}]-Einheiten hydrolysiert. Diese Verfahrensführung birgt den Vorteil, dass die Zugabe weiterer Vorstufen für silikatische Aerogele wie beispielsweise den Vorstufen für [RₓSiO_{(4-x/2)}]-Einheiten direkt mit der Erzeugung der Säure durch Hydrolyse der Chlorsilane, in einem Prozessschritt gekoppelt wird.

Ein Vorteil des erfindungsgemäßen Verfahrens ist es, dass die Gelbildung durch Zugabe der Säure zur zuvor hergestellten Emulsion der basischen, polaren Phase, enthaltend Wasser und Ausgangsstoffe für silikatische Gele, in der unpolaren Phase, enthaltend eine mit Wasser nicht mischbare Vorstufe für ein aktives Silylierungsmittel durchgeführt wird. Erfindungsgemäß wird also kein Hydrogel vorgelegt und anschließend silyliert, sondern die Gelbildung findet in Anwesenheit der Vorstufe für ein aktives Silylierungsmittel statt. Dadurch wird der Prozessschritt einer externen Solbildung eingespart, Zudem müssen gesondert hergestellte Sole nach Einstellung des zur Gelbildung geeigneten pH-Werts entweder durch intensive Kühlung stabil gehalten werden oder die Emulgierung muss sehr schnell erfolgen, um eine vorzeitige Gelbildung zu vermeiden. Entsprechend ist das erfindungsgemäße Verfahren weniger energieintensiv, kostengünstiger und prozesstechnisch einfacher durchführbar.

Die Gelbildung wird erfindungsgemäß aus Gründen der Wirtschaftlichkeit bei möglichst niedriger Temperatur durchgeführt, Wenn es erforderlich ist, um kurze Gelbildungszeiten zu erreichen, kann eine Beschleunigung der Gelbildungszeit in Emulsion über eine Temperaturerhöhung oder durch Zugabe eines Gelbildungsbeschleunigers erreicht werden. Hierfür werden bevorzugt Alkalisalze eingesetzt. Im Allgemeinen wird die Gelbildung bei einer Temperatur zwischen 0 °C und dem Siedepunkt der enthaltenden Lösemittel, bevorzugt zwischen 20 und 80 °C durchgeführt, besonders bevorzugt zwischen 40 und 60 °C durchgeführt. Die Gelbildungszeit, also die Dauer, bis nach Senkung des pH Werts ein Gel gebildet wird, liegt bevorzugt bei weniger als 60 Minuten, besonders bevorzugt bei weniger als 15 Minuten und besonders bevorzugt bei weniger als 5 Minuten.

Erfindungsgemäß erfolgt im Anschluss an die Gelbildung eine Alterung, Eine Alterung im Sinne der Erfindung bedeutet, dass die dispergierten Hydrogelpartikel bei einer Temperatur im Bereich von 20 bis 100 °C, vorzugsweise bei 40 bis 60 °C und einem pH-Wert von 7 bis 10, vorzugsweise 8 bis 9 für eine definierte Zeitperiode (Alterungsdauer) inkubiert werden. Es ist bevorzugt, die Alterung bei den gleichen Bedingungen (pH-Wert und Temperatur) wie die Gelbildung durchzuführen. Die Alterungsdauer liegt zwischen 15 Minuten und 3 Stunden, bevorzugt zwischen 15 Minuten und 2 Stunden.

Anschließend werden die erhaltenen Gelpartikel durch Silylierung oberflächenmodifiziert. Erfindungsgemäß werden Silylierung und Lösungsmittelaustausch im 3. Schritt des Verfahrens (Schritt iii) durch Senkung des pH-Werts gestartet. Zum Start der Reaktion wird als Initiator zur Aktivierung der Vorstufe des Silylierungsmittels eine Mineralsäure, bevorzugt Salzsäure zugegeben. Dabei erfolgt eine Senkung des pH-Werts in den stark sauren Bereich. Bevorzugt wird die Silylierung bei einem pH-Wert kleiner 3, besonders bevorzugt kleiner 2 und insbesondere bevorzugt kleiner 1,5 durchgeführt. Bevorzugt wird zur Senkung des pH-Werts in Schritt iii) eine Mineralsäure verwendet, besonders bevorzugt wird HNO₃ (Salpetersäure) oder HCl (Salzsäure) eingesetzt. Die Zeit für den Prozess der Silylierung beträgt bevorzugt weniger als 12 Stunden, weiter bevorzugt zwischen 15 Minuten und 3 Stunden, insbesondere bevorzugt zwischen 15 Minuten und 2 Stunden und speziell bevorzugt zwischen 15 und 60 Minuten, Die Reaktion wird bevorzugt zwischen 40 und 90 °C, besonders bevorzugt zwischen 40 und 80 °C durchgeführt, Es ist insbesondere bevorzugt, die Silylierung bei der Temperatur, bei der die vorhergehenden Schritte durchgeführt wurden, durchzuführen.

Es ist für eine Vereinfachung des Prozesses und eine Reduzierung der aufzuarbeitenden Abfälle bevorzugt, in Schritt ii) und Schritt iii) die gleiche Mineralsäure einzusetzen. Es ist besonders bevorzugt, in Schritt ii) und Schritt iii) Salzsäure einzusetzen.

Während der Silylierung können in der Reaktionsmischung Phasenvermittler vorhanden sein. Diese Phasenvermittler können entweder aus den Ausgangsstoffen für die Gele gebildet oder der Reaktionsmischung zugegeben werden. Die Phasenvermittler können entweder bereits der wässrigen Phase, vor, während oder nach der Gelbildung, während oder nach der Alterung, also unmittelbar vor Beginn der Silylierung, zugesetzt werden. Für die Phasenvermittler gilt oben genannte Definition.

Unter einem Lösungsmittelaustausch versteht man, dass während der Silylierung die polare, wasser- und elektrolythaltige Porenflüssigkeit aus dem Gel verdrängt und durch die organische Phase, bevorzugt Disiloxan, insbesondere bevorzugt durch Hexamethyldisiloxan, ersetzt wird. Da die wässrige Porenflüssigkeit mit der organischen Phase im Wesentlichen nicht mischbar ist, bildet sich während der Silylierung eine zweite, wässrige, flüssige Phase. Da die wässrige Phase eine höhere Dichte als die organische Phase besitzt und die Gelpartikel bevorzugt in der organischen Phase enthalten sind, ermöglicht das erfindungsgemäße Verfahren eine einfache und ressourcenschonende Stofftrennung. Über die Bestimmung der Menge an verdrängter Porenflüssigkeit kann zudem der Reaktionsverlauf verfolgt werden.

Es ist vorteilhaft und daher bevorzugt, vor der weiteren Aufarbeitung des Gels die wässrige, elektrolythaltige Phase von der organischen Phase enthaltend das Lyogel durch eine Phasentrennung zu entfernen. Das Gel bzw. die organische Phase enthaltend das Lyogel kann anschließend mit Lösungsmitteln gewaschen und/oder extrahiert werden. Es ist besonders vorteilhaft, das Reaktionsgemisch mit Wasser zu waschen, um verbleibende Elektrolyte in Form von Salzen und überschüssigen Säuren zu entfernen. Diese einfache Fahrweise zur Abtrennung der Elektrolyte ist, im Gegensatz zu einer dem Prozess vorgelagerten Abtrennung eines Großteils der Elektrolyte, beispielsweise über einen Ionentausch, insbesondere für eine großtechnische Umsetzung von besonderer Bedeutung.

Es ist vorteilhaft und daher bevorzugt, die Gelpartikel nach Abtrennung der wässrigen Phase von der überschüssigen unpolaren Phase abzutrennen. Die Stofftrennung kann über alle dem Fachmann bekannten Methoden zur Fest-Flüssig- und/oder Flüssig-Flüssig-Trennung durchgeführt werden (z.B. Dekanter, Absitzbecken, Zentrifugen, Destillation,...).

Es ist bevorzugt, dass das nach dem erfindungsgemäßen Verfahren hergestellte Gel getrocknet wird. Im Allgemeinen kann die Trocknung sowohl im überkritischen Bereich als auch im unterkritischen Bereich erfolgen. Bevorzugt findet eine Trocknung unterhalb des kritischen Punktes des Lösungsmittels statt, vorzugsweise bei Temperaturen von -30 bis 200 °C, besonders bevorzugt 0 bis 150 °C, sowie bei Drücken vorzugsweise von 0,001 bis 20 bar, besonders bevorzugt 0,01 bis 5 bar, insbesondere 0,01 bis 2 bar. Die Trocknung kann dabei durch Strahlungs-, Konvektions- und/oder Kontakttrocknung erfolgen. Die Trocknung wird vorzugsweise so lange durchgeführt, bis das Gel einen Lösungsmittel-Restgehalt von weniger als 0,1 Gew.-% aufweist.

Vor, während oder nach der Trocknung, bevorzugt während oder nach der Trocknung, kann gegebenenfalls eine Agglomeration der Gele zu größeren Partikeln erfolgen. Dies kann beispielsweise nach bekannten Verfahren erfolgen (s. z.B. US 6,481,649 B1 und US 6,620,355 B1). Es ist bevorzugt, dass die getrockneten Gele agglomeriert werden.

Die vorliegende Erfindung stellt daher ein schnelles, kostengünstiges, einfach und sicher durchzuführendes sowie ressourcenschonendes Verfahren zur Herstellung organisch modifizierter Gele ausgewählt aus Lyo- und Aerogelen zur Verfügung. Das erfindungsgemäße Verfahren zeichnet sich besonders durch die Kombination der Vorteile des schnellen Reaktionsverlaufs, der Verwendung relativ geringer Mengen an Säuren als Initiator bei relativ milden Temperaturbedingungen während der Gelbildung und der Silylierung aus. Die besonders bevorzugte Ausführungsform der direkten Emulgierung der Vorstufen für silikatische Gele in der mit Wasser nicht mischbaren Vorstufe für ein aktives Silylierungsmittel und anschließender Gelherstellung und Oberflächenmodifizierung, wobei die Wasserverdrängung und Entfernung von Elektrolyten in einem Schritt durchgeführt wird, stellt ein Verfahren zur Verfügung, das aufgrund eines besonders effizienten Stoffrecyclings, schnellem Stofftransport und schnellen Reaktionsschritten die Realisierung eines kontinuierlichen, großtechnischen Prozesses ermöglicht. Die einzelnen Vorteile wurden oben bereits detailliert diskutiert.

Die durch das erfindungsgemäße Verfahren herstellbaren Aerogele werden bevorzugt für Isolierungsanwendungen eingesetzt, besonders bevorzugt in der thermischen oder akustischen Isolierung. Insbesondere bevorzugt werden die erfindungsgemäßen oder erfindungsgemäß herstellbaren Aerogele als Wärmedämmstoff eingesetzt.

### Analysemethoden

### Bestimmung der Schüttdichte

Die Schüttdichte wurde in Anlehnung an DIN 53468 ermittelt, indem das Aerogelpulver ohne weitere Verdichtung in ein zylindrisches Gefäß bekannten Volumens (50 cm³) geschüttet und anschließend das Gewicht des Aerogelpulvers über Wiegen ermittelt wurde.

### Bestimmung der BET-Oberfläche

Die spezifische Oberfläche der Aerogele wurde bestimmt nach der BET-Methode entsprechend DIN 9277/66131 und 9277/66132.

### Bestimmung des BJH-Porenvolumens und des mittleren Porendurchmessers

Die Porenanalyse wurde nach der Methode von Barrett, Joyner und Halenda (BJH, 1951) entsprechend DIN 66134 durchgeführt, Für die Auswertung wurden die Daten der Desorptionsisotherme genutzt.

### Bestimmung der Ausbeute

Zur Bestimmung der Ausbeute wurden die Gelpartikel bis zur Gewichtskonstanz getrocknet und anschließend bei Raumtemperatur gewogen.

### Bestimmung der thermischen Leitfähigkeit

Die thermische Leitfähigkeit wurde mit einem THB Transient Hot Bridge Analyzer (THB-100) der Firma Linseis unter Verwendung eines THB Hot Point Sensors (3x3 mm Kapton) bei Raumtemperatur bestimmt (Messzeit 30 Sekunden, Stromstärke: 5 mA, Heizleistung: 5 mW). Für die Messung wurde der Sensor in die nicht verdichtete Schüttung des Produktes eingeführt, die Messung erfolgte also bei der angegebenen Schüttdichte

### Abschätzung des pH-Werts

Der pH-Wert wurde mittels Universalindikatorpapier der Firma *Fisherbrand* (pH Bereich 1 - 14) abgeschätzt.

### Bestimmung des Kohlenstoffgehalts

Die Bestimmung des Kohlenstoffgehalts (C-Gehalts) der Proben wurde an einem *Leco CS* 230 *Analysator* durchgeführt. Die Analyse erfolgte durch Hochfrequenzverbrennung der Probe im Sauerstoffstrom. Detektiert wurde mittels nicht dispersiver Infrarotdetektoren.

### Bestimmung des Gehalts an Alkalimetallen (Natrium und Kalium)

Die Bestimmung des Gehalts an Alkalimetallionen wird mittels ICP-Emissionsspektroskopie an einem *Perkin Elmer Optima 7300 DV* durchgeführt, Grundlage der Messung ist das von den Alkalimetallatomen emittierte und spektral zerlegte Licht, wenn sie in ein innerhalb einer Hochfrequenzspule erzeugtes 6000 - 8000 K heißes Argonplasma gesprüht werden.

### Bestimmung der thermischen Leitfähigkeit

Die thermische Leitfähigkeit wurde mit einem Linseis THB-100 in der Pulverschüttung bestimmt.

### Ausführungsbeispiele

Die Erfindung wird im Folgenden anhand von Ausführungsbeispielen näher beschrieben, ohne dadurch beschränkt zu werden.

### Bezugsquellen

Wasserglas (Beispiele 1-5: Sigma-Aldrich: SiO₂-Gehalt: 26,5 Gew.-%, Na₂O-Gehalt: 10,6 Gew.-%; Beispiel 7: Wöllner: Natriumsilikat 38/40, Festgehalt: 36 Gew.-%, SiO₂ / Na₂O = 3,3) Kaliummethylsiliconat (SILRES® BS 16 der Wacker Chemie AG: wässrige Lösung mit 34 Gew.-% Wirkstoffanteil und 20 Gew.-% K₂O)
SiO₂-Nanosol (Bindzil 17/750 der Firma Akzo Nobel: SiO₂-Gehalt: 15 Gew.-%, mittl. Partikeldurchmesser laut Hersteller: 4 nm, pH 10,5)
Hexamethyldisiloxan (AK 0,65 der Wacker Chemie AG)

Alle weiteren Laborchemikalien wurden, soweit nicht gesondert erwähnt, von Sigma-Aldrich bezogen.

### Beispiel 1

In einem Glasgefäß wurden 10 g Wasserglas und 5 g Kaliummethylsiliconat gemischt und mit 40 g Wasser und 8 g Ethanol verdünnt. 50 g der erhaltenen Lösung wurden in 200 ml Hexamethyldisiloxan durch Rühren mit einem KPG-Rührer bei 400 UpM in einem 500 ml Rundkolben emulgiert und die erhaltene Emulsion auf 40°C erwärmt. Zu dieser Emulsion wurden 20 ml HNO₃-Lösung (10 Gew.-%) gegeben um die Gelbildung zu starten. Dabei senkte sich der pH Wert auf etwa 9, Nach 1,5 Stunden Rühren bei 40°C wurden 20 ml HCl-Lösung (32 Gew.-%) zum Start der Silylierung und des Lösungsmittelaustauschs zugegeben, wobei sich ein pH Wert von 1 einstellte. Nach 45 Minuten war die Wasserverdrängung vollständig, Die wässrige Phase (86 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,095 g/cm³
BET: 630 m²/g
C-Gehalt: 13,7 %
Na-Gehalt: < 0,1 %
K-Gehalt: < 0,1 %

Thermische Leitfähigkeit (Schüttung): 17,5 mW / K*m

### Beispiel 2

In einem Glasgefäß wurden 10 g Wasserglas und 5 g Kaliummethylsiliconat gemischt und mit 40 g Wasser und 8 g Ethanol verdünnt. 50 g der erhaltenen Lösung wurden in 200 ml Hexamethyldisiloxan durch Rühren mit einem KPG-Rührer bei 400 UpM in einem 500 ml Rundkolben emulgiert und die erhaltene Emulsion auf 40°C erwärmt. Zu dieser Emulsion wurden 20 ml HCl-Lösung (6 Gew.-%) gegeben um die Gelbildung zu starten. Dabei senkte sich der pH Wert auf etwa 9. Nach 1,5 Stunden Rühren bei 40°C wurden 20 ml HCl-Lösung (32 Gew.-%) zum Start der Silylierung und des Lösungsmittelaustauschs zugegeben, wobei sich ein pH Wert von 1 einstellte. Nach 30 Minuten war die Wasserverdrängung vollständig. Die wässrige Phase (85 ml) wurde abgetrennt und die organische Phase enthaltend das Lyogel wurde noch zwei Mal mit jeweils 50 ml Wasser bei Raumtemperatur intensiv für 5 Minuten aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,12 g/cm³
BET: 640 m²/g
BJH-Porenvolumen: 3,2 cm³/g
Mittlerer Porendurchmesser: 14 nm
Ausbeute: 3,7 g
C-Gehalt: 13,5 %
Na-Gehalt: < 0,1 %
K-Gehalt: < 0,1 %
Thermische Leitfähigkeit (Schüttung): 18,5 mW / K*m

### Beispiel 3

In einem Glasgefäß wurden 11,25 g Wasserglas und 3,75 g Kaliummethylsiliconat gemischt und mit 40 ml Wasser und 10 ml Ethanol verdünnt. 50 ml der erhaltenen Lösung wurden in 100 ml Hexamethyldisiloxan durch Rühren mit einem KPG-Rührer bei 400 UpM in einem 500 ml Rundkolben emulgiert. Die erhaltene Emulsion wurde auf 40°C erwärmt. Zu dieser Emulsion wurden 20 ml HCl-Lösung (6 Gew.-%) gegeben um die Gelbildung zu starten. Dabei senkte sich der pH Wert auf etwa 10. Nach 1,5 Stunden Rühren bei 40°C wurden 20 ml HCl-Lösung (32 Gew.-%) zum Start der Silylierung und des Lösungsmittelaustauschs zugegeben, wobei sich ein pH Wert von 1 einstellte. Nach 45 Minuten war die Wasserverdrängung vollständig. Die wässrige Phase (81 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,11 g/cm³
BET: 630 m²/g
BJH-Porenvolumen: 3,0 m²/g
Mittlerer Porendurchmesser: 14 nm
Ausbeute: 3,5 g
C-Gehalt: 12,2 %
Na-Gehalt: 0,14 %
K-Gehalt: 0,10 %
Thermische Leitfähigkeit: 19,1 mW / K*m

### Beispiel 4

In einem Glasgefäß wurden 11,25 g Wasserglas und 3,75 g Kaliummethylsiliconat gemischt und mit 40 ml Wasser und 10 ml Ethanol verdünnt. 50 ml der erhaltenen Lösung wurden in 100 ml Hexamethyldisiloxan durch Rühren mit einem KPG-Rührer bei 400 UpM in einem 500 ml Rundkolben emulgiert. Die erhaltene Emulsion wurde auf 40°C erwärmt. Zu dieser Emulsion wurden 20 ml HCl-Lösung (6 Gew.-%) gegeben um die Gelbildung zu starten. Dabei senkte sich der pH Wert auf etwa 10. Nach 30 Minuten Rühren bei 40°C wurden 20 ml HCl-Lösung (32 Gew.-%) zum Start der Silylierung und des Lösungsmittelaustauschs zugegeben, wobei sich ein pH Wert von 1 einstellte. Nach 45 Minuten war die Wasserverdrängung vollständig. Die wässrige Phase (83 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,11 g/cm³
BET: 690 m²/g
BJH-Porenvolumen: 3,1 cm3/g
Mittlerer Porendurchmesser: 15 nm
Ausbeute: 3,5 g
C-Gehalt: 13,1 %
Na-Gehalt: 0,35 %
K-Gehalt: 0,27 %
Thermische Leitfähigkeit: 20,9 mW / K*m

### Beispiel 5

In einem Glasgefäß wurden 15 g Wasserglas mit 50 ml Wasser verdünnt. 50 ml der erhaltenen Lösung wurden in 100 ml Hexamethyldisiloxan durch Rühren mit einem KPG-Rührer bei 400 UpM in einem 500 ml Rundkolben emulgiert. Die erhaltene Emulsion wurde auf 40°C erwärmt. Zu dieser Emulsion wurden 20 ml HCl-Lösung (6 Gew.-%) gegeben um die Gelbildung zu starten. Dabei senkte sich der pH Wert auf etwa 8. Nach 1,5 Stunden Rühren bei 40°C wurden 20 ml Ethanol und 20 ml HCl-Lösung (32 Gew.-%) zum Start der Silylierung und des Lösungsmittelaustauschs zugegeben, wobei sich ein pH Wert von 1 einstellte. Nach 75 Minuten war die Wasserverdrängung vollständig. Die wässrige Phase (100 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,06 g/cm³
BET: 580 m2/g
BJH-Porenvolumen: 4,9 cm3/g
Mittlerer Porendurchmesser: 24 nm
Ausbeute: 3,1 g
C-Gehalt: 6,9 %
Na-Gehalt: 0,32 %
Thermische Leitfähigkeit: 18,5 mW / K*m

### Beispiel 6

In einem Glasgefäß wurden 15 g Bindzil 15/750 und 3,1 g SILRES® BS16 mit 35 g Wasser verdünnt. Die erhaltene Lösung wurde in 100 ml Hexamethyldisiloxan durch Rühren mit einem KPG-Rührer bei 400 UpM in einem 500 ml Rundkolben emulgiert. Die erhaltene Emulsion wurde auf 40°C erwärmt. Zu dieser Emulsion wurden 5,7 g HCl-Lösung (10 Gew.-%) gegeben um die Gelbildung zu starten. Dabei senkte sich der pH Wert auf etwa 8. Nach 1,5 Stunden Rühren bei 40°C wurden 20 ml Ethanol und 20 ml HCl-Lösung (32 Gew.-%) zum Start der Silylierung und des Lösungsmittelaustauschs zugegeben und die Mischung auf 80°C erhitzt, wobei sich ein pH Wert von 1 einstellte. Nach 45 Minuten war die Wasserverdrängung vollständig. Die wässrige Phase (81 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,12 g/cm³
BET: 470 m²/g
BJH-Porenvolumen: 2,9 cm3/g
Mittlerer Porendurchmesser: 18 nm
Ausbeute: 2,7 g
C-Gehalt: 8,5 %
Na-Gehalt: < 0,1 %
Thermische Leitfähigkeit: 18,7 mW / K*m

### Beispiel 7

In einem Glaskolben (500 ml) ausgestattet mit einem KPG-Rührer (400 UpM) wurden 200 ml Hexamethyldisiloxan vorgelegt und sukzessive 84,36 g Wasser und 21,74 g Wasserglas (Wöllner) zugegeben. Die erhaltene Emulsion wurde auf 40°C erwärmt. Anschließend wurden 2,5 g Methyltrichlorsilan zugegeben um die Gelbildung zu starten. Dabei senkte sich der pH Wert auf etwa 8. Nach 1,5 Stunden Rühren bei 40°C wurden 20 ml Ethanol und 20 ml HCl-Lösung (32 Gew.-%) zum Start der Silylierung und des Lösungsmittelaustauschs zugegeben, wobei sich ein pH Wert von 1 einstellte, und die Mischung auf 80°C erhitzt. Nach 30 Minuten war die Wasserverdrängung vollständig. Die wässrige Phase (115 ml) wurde abgetrennt und die organische Phase enthaltend das Lyogel wurde noch zwei Mal mit jeweils 50 ml Wasser bei Raumtemperatur aufgerührt (400 UpM) und die wässrige Phase erneut abgetrennt. Die erhaltene organische Phase wurde filtriert und das erhaltene Lyogel bis zur Gewichtskonstanz in einem Trockenschrank bei 120 °C getrocknet.

### Analytische Daten

Schüttdichte: 0,13 g/cm³
BET: 680 m²/g
BJH-Porenvolumen: 2,9 cm3/g
Mittlerer Porendurchmesser: 11 nm
Ausbeute: 6,4 g
C-Gehalt: 10,0 %
Na-Gehalt: 0,68 %
Thermische Leitfähigkeit: 19,3 mW / K*m

## Patentansprüche

1. Verfahren zur Herstellung von Lyogelen, in dem
i) eine basische, polare Phase, enthaltend Wasser und Ausgangsstoffe für silikatische Gele, in einer unpolaren Phase, enthaltend eine mit Wasser nicht mischbare Vorstufe für ein aktives Silylierungsmittel, emulgiert wird,
ii) Gelbildung und Alterung durch Senkung des pH-Werts gestartet werden, und anschließend
iii) durch Senkung des pH-Werts die Silylierung und der Lösungsmittelaustausch gestartet werden.

2. Verfahren nach Anspruch 1, **dadurch gekennzeichnet, dass** die basische, polare Phase eine Mischung der Ausgangsstoffe für [SiO_{4/2}] - und [RₓSiO_{(4-x/2)}] -Einheiten, wobei x=1 oder 2 oder deren Gemische und R gleich oder verschieden sein kann und Wasserstoff oder ein organischer, substituierter oder unsubstituierter Rest bedeutet, enthält.

3. Verfahren nach einem der Ansprüche 1 oder 2 **dadurch gekennzeichnet, dass** in der basischen, polaren Phase ein Phasenvermittler vorhanden ist.

4. Verfahren nach einem oder mehreren der Ansprüche 1 bis 3, **dadurch gekennzeichnet, dass** die basische, polare Phase durch Mischung der einzelnen Komponenten in der unpolaren Phase hergestellt wird.

5. Verfahren nach einem oder mehreren der Ansprüche 1 bis 4, **dadurch gekennzeichnet, dass** die unpolare Phase nur aus einer mit Wasser nicht mischbaren Vorstufe für ein aktives Silylierungsmittel besteht.

6. Verfahren nach einem oder mehreren der Ansprüche 1 bis 5, **dadurch gekennzeichnet, dass** als mit Wasser nicht mischbare Vorstufen für ein aktives Silylierungsmittel Disiloxane oder deren Mischungen verwendet werden.

7. Verfahren nach einem oder mehreren der Ansprüche 1 bis 6, **dadurch gekennzeichnet, dass** als mit Wasser nicht mischbare Vorstufe für ein aktives Silylierungsmittel Hexamethyldisiloxan verwendet wird.

8. Verfahren nach einem oder mehreren der Ansprüche 1 bis 7, **dadurch gekennzeichnet, dass** in Schritt ii) zur Senkung des pH-Werts ein Chlorsilan eingesetzt wird.

9. Verfahren nach einem oder mehreren der Ansprüche 1 bis 7, **dadurch gekennzeichnet, dass** in Schritt ii) zur Senkung des pH-Werts eine Mineralsäure verwendet wird.

10. Verfahren nach einem oder mehreren der Ansprüche 1 bis 7 oder 9, **dadurch gekennzeichnet, dass** zur Senkung des pH-Werts in Schritt ii) und Schritt iii) die gleiche Mineralsäure verwendet wird.

11. Verfahren nach einem oder mehreren der Ansprüche 1 bis 10, **dadurch gekennzeichnet, dass** die erhaltenen Gele getrocknet werden.

## Claims

1. Process for producing lyogels, by
i) emulsifying a basic, polar phase comprising water and starting materials for silicatic gels in an apolar phase comprising a water-immiscible precursor of an active silylating agent,
ii) commencing gel formation and aging by lowering the pH, and then
iii) lowering the pH to commence silylation and solvent exchange.

2. Process according to Claim 1, **characterized in that** the basic, polar phase comprises a mixture of the starting materials for [SiO_{4/2}] and [RₓSiO_{(4-x/2)}] units where x=1 or 2 or mixtures thereof and R may be identical or different and is hydrogen or an organic, substituted or unsubstituted radical.

3. Process according to one of Claims 1 or 2, **characterized in that** there is a phase mediator in the basic, polar phase.

4. Process according to one or more of Claims 1 to 3, **characterized in that** the basic, polar phase is produced by mixing the individual components in the apolar phase.

5. Process according to one or more of Claims 1 to 4, **characterized in that** the apolar phase consists only of a water-immiscible precursor of an active silylating agent.

6. Process according to one or more of Claims 1 to 5, **characterized in that** disiloxanes or mixtures thereof are used as water-immiscible precursors of an active silylating agent.

7. Process according to one or more of Claims 1 to 6, **characterized in that** hexamethyldisiloxane is used as water-immiscible precursor of an active silylating agent.

8. Process according to one or more of Claims 1 to 7, **characterized in that** a chlorosilane is used in step ii) for lowering the pH.

9. Process according to one or more of Claims 1 to 7, **characterized in that** a mineral acid is used in step ii) for lowering the pH.

10. Process according to one or more of Claims 1 to 7 and 9, **characterized in that** the same mineral acid is used in step ii) and step iii) to lower the pH.

11. Process according to one or more of Claims 1 to 10, **characterized in that** the gels obtained are dried.

## Revendications

1. Procédé de fabrication de lyogels, selon lequel
i) une phase polaire basique, contenant de l'eau et des matières premières pour gels silicatés, est émulsifiée dans une phase apolaire, contenant un précurseur non miscible avec l'eau pour un agent de silylation actif,
ii) la gélification et le vieillissement sont démarrés par abaissement du pH, puis,
iii) la silylation et l'échange de solvants sont démarrés par abaissement du pH.

2. Procédé selon la revendication 1, **caractérisé en ce que** la phase polaire basique contient un mélange des matières premières pour des unités [SiO_{4/2}] et [RₓSiO_{(4-x/2)}], avec x = 1 ou 2 ou leur mélange, et les R pouvant être identiques ou différents et signifiant l'hydrogène ou un radical organique, substitué ou non substitué.

3. Procédé selon l'une quelconque des revendications 1 ou 2, **caractérisé en ce qu'**un agent de compatibilisation de phases est présent dans la phase polaire basique.

4. Procédé selon une ou plusieurs des revendications 1 à 3, **caractérisé en ce que** la phase polaire basique est fabriquée par mélange des composants individuels dans la phase apolaire.

5. Procédé selon une ou plusieurs des revendications 1 à 4, **caractérisé en ce que** la phase apolaire n'est constituée que par un précurseur non miscible avec l'eau pour un agent de silylation actif.

6. Procédé selon une ou plusieurs des revendications 1 à 5, **caractérisé en ce que** des disiloxanes ou leurs mélanges sont utilisés en tant que précurseurs non miscibles avec l'eau pour un agent de silylation actif.

7. Procédé selon une ou plusieurs des revendications 1 à 6, **caractérisé en ce que** de l'hexaméthyldisiloxane est utilisé en tant que précurseur non miscible avec l'eau pour un agent de silylation actif.

8. Procédé selon une ou plusieurs des revendications 1 à 7, **caractérisé en ce qu'**un chlorosilane est utilisé à l'étape ii) pour l'abaissement du pH.

9. Procédé selon une ou plusieurs des revendications 1 à 7, **caractérisé en ce qu'**un acide minéral est utilisé à l'étape ii) pour l'abaissement du pH.

10. Procédé selon une ou plusieurs des revendications 1 à 7 ou 9, **caractérisé en ce que** le même acide minéral est utilisé à l'étape ii) et à l'étape iii) pour l'abaissement du pH.

11. Procédé selon une ou plusieurs des revendications 1 à 10, **caractérisé en ce que** les gels obtenus sont séchés.
